Europäisches Patentamt

European Patent Office

Office européen des brevets

(19)

(11) Veröffentlichungsnummer: **0 393 040 B1**

## (12) EUROPÄISCHE PATENTSCHRIFT

(45) Veröffentlichungstag der Patentschrift:
06.11.91 Patentblatt 91/45

(51) Int. Cl.⁵: **B60K 41/06, B60K 41/26**

(21) Anmeldenummer: **88907277.3**

(22) Anmeldetag: 10.08.88

(86) Internationale Anmeldenummer:
**PCT/EP88/00713**

(87) Internationale Veröffentlichungsnummer:
**WO 89/01421 23.02.89 Gazette 89/05**

(54) **STEUEREINRICTUNG ZUM SELBSTTÄTIGEN SCHALTEN VON STUFENWECHSELGETRIEBEN.**

(30) Priorität: **17.08.87 DE 3727349**

(43) Veröffentlichungstag der Anmeldung:
**24.10.90 Patentblatt 90/43**

(45) Bekanntmachung des Hinweises auf die
Patenterteilung:
**06.11.91 Patentblatt 91/45**

(84) Benannte Vertragsstaaten:
**DE FR GB SE**

(56) Entgegenhaltungen:
**EP-A- 0 210 404
WO-A-86/02112
DE-A- 3 304 847
DE-A- 3 621 674**

(73) Patentinhaber: **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder: **PETZOLD, Rainer
Oberhofstrasse 79
W-7990 Friedrichshafen (DE)**

**Beschreibung**

Die Erfindung betrifft eine Steuereinrichtung zum selbsttätigen Schalten von Stufenwechselgetrieben in Kraftfahrzeugen oder zur Ermittlung von Schaltempfehlungen für ein solches Getriebe mit einem elektronischen Steuergerät zur Ermittlung der Schaltpunkte und der zu schaltenden Gänge, wobei dem elektronischen Steuergerät über Sensoren Informationen über zumindest die Motor- und Getriebeausgangsdrehzahlen sowie die Lastanforderung - Gaspedalstellung - fortwährend zugeleitet und mit gespeicherten Informationen vom elektronischen Steuergerät verarbeitet werden und über die Schaltpunkte und Gangauswahl zu einer vorteilhaften Anpassung des Antriebsstranges an die jeweilige Fahrsituation führen. Dazu ist in einem elektronischen Steuergerät ein Motorkennfeld für den Kraftstoffverbrauch abgespeichert. Über die Motordrehzahl und die Motorleistung und unter Einbeziehung der Beschleunigung werden die Schaltpunkte für eine Schaltung festgelegt.

Bekannte, selbsttätig schaltende Stufenwechselgetriebe für Kraftfahrzeuge werden in Abhängigkeit von Drehzahlen, vorrangig der der Fahrgeschwindigkeit proportionalen Abtriebsdrehzahl des Getriebes und von Lastzuständen, z. B. Stellung des Gaspedals, selbsttätig im Bereich der zur Verfügung stehenden Gänge geschaltet. Es ist auch schon bekannt, daß durch den Fahrer über einen Wählschalter Gänge von dieser Schaltfolge ausgeschlossen werden können, z. B. bei Bergabfahrt; solche Wählschalter haben neben den Stellungen für die normale Vorwärtsfahrt D, die Neutralstellung N und die Rückwärtsfahrt R z. B. die Stellungen I, II und III, wobei die automatischen Schaltungen des Getriebes dann analog dazu, z. B. auf den ersten Gang oder ehen auf die Gänge 2 und 3, begrenzt sind. Siehe Broschüre ZF-Automat-Getriebe HP 500, beschreibung, Bedienung und Wartung, F 1/12 ZFF 792006.

Dieses System hat sich bewährt und gibt dem Fahrer ausreichende Eingriffsmöglichkeiten bei selbsttätig schaltenden Stufenwechselgetrieben mit relativ wenig Gängen.

Bei Vielgng-Automatgerieben, z. B. nahc der DE-A- 33 37 930, ist schon bekannt, nicht nur höhere, sondern auch tiefere Gänge durch eine entsprechende Verstellung von zwei Wählhebeln com automatischen Schalten auszuschließen, z. B. bei Leerfahrten und Fahrten mit Teilbeladung. Weiter ist noch aus der EP-A- 01 21 168 bekannt, durch einen Vorwählschalter auch bei einem selbsttätig schaltenden Stufenwechselgetriebe die Schaltpunkte entsprechend einer ökonomischen oder leistungsbezogen Fahrweise zu verändern.

Weiter ist nach der WO-A-86/02112 bekannt, nicht nur Gänge am Anfang und am Ende der zur Verfügung stehenden Gangfolge, z. B. eines Vielganggetriebes, von der automatischen Schaltfolge auszuschließen, sondern in Abhängigkeit von der Ist-Beschleunigung eine Gangfolge nach vorher festgelegten Schaltmodi auszuwählen, die über den gesamten Übersetzungsbereich sich erstrecken, aber nicht alle möglichen Gänge in Anspruch nehmen. So wird z. B. in einem 16-Gang-Getriebe durch Überspringen von Gängen der Übersetzungsbereich mit weniger Gängen abgedeckt, wobei die ausgewählten Gänge in vorher festgelegten und gespeicherten Schaltmodi gleichmäßige, aber auch ungleichmäßige Abstände voneinander oder auch eine Kombination davon, haben können. Damit ist es möglich, bei Ausnutzung der Gesamtübersetzung, je nach bedingungen, im Antriebsstrang mit weniger Gängen auszukommen und die Anzahl der Schaltungen zu verringern.

Aus der WO-A-86/05449 ist noch bekannt, die Schaltpunkte in Abhängigkeit von der Fahrzeuggeschwindigkeit und der Gashebelstellung sowie der Beschleunigung abzuleiten, wobei diesen Schaltpunkten Schaltbefehle zugeordnet sind, die auch über mehrere Gänge sich erstrecken kinnen. Diese den Schaltpunkten zugeordneten Schaltbefehle werden aus Erfahrungen festgelegt oder errechnet und sollen den Schaltverhalten eines guten Fahrers vergleichbar sein.

Und schließlich ist aus der EP-A-210 404 eine Antriebsstrang-Steuerung bekannt, bei der das Getriebe unter Berücksichtigung der Kennkurven des Motors gestaltet wird. Einer Motorelektronik, einer Getriebeelektronik und einem Leitrechner werden die benötigten Signale, wie E-Gas, Lastanforderung, Bremsbetätigung, Motordrehzahl, Cetriebedrehzahlen usw., zugeleitet und der Kraftstoffverbrauch, die Leistung und das Drehmoment werden in Funktionen der Motordrehzahl gespeichert. Vom Leitrechner wird unter Berücksichtigung eines eingelegten Ganges, der Motorleistung und der Motordrehzahl aus dem Muscheldiagramm der gegenwärtige Brennstoffverbrauch ermittelt. Bevor der Leitrechner einen Gangwechsel veranlaßt, ermittelt er erst den neuen Verbrauch, der sich infolge eines Gangwechsels und der damit verbundenen Drehzahländerung entlang der Leistungskennlinie ergibt. Nach dem Ergebnis des Vergleiches wird eine Schaltung veranlaßt oder, wenn nicht gerechtfertigt, noch nicht durchgeführt. Zur Unterdrückung einer zu hohen Schalthäufigkeit wird vom Leitrechner, bevor ein Schaltbefehl erteilt wird, die Beschleunigung mitberücksichtigt.

Mit solchen Steuereinrichtungen sind auch selbsttätige Schaltungen bei Vielgang-Getrieben möglich, die eine gute Anpassung der zu schaltenden Gänge an die jeweilige Fahrsituation ermöglichen, ohne daß eine zu hohe Schalthäufigkeit entsteht. Die Anpassung der Steuereinrichtung an die jeweiligen Fahrzeuge ist jedoch sehr aufwendig, wenn eine befriedigende Berücksichtigung von z. B. ökonomischen Bedingungen erfolgt und eine dynamische Fahrweise, verbunden mit einer hohen Sicherheit, auch bei Nutzkraftfahrzeugen und im Zusammenhang mit einem Vielgang-Getriebe, erzielt werden soll.

Ausgehend von der letztgenannten Druckschrift ist es Aufgabe der Erfindung, eine Steuereinrichtung weiterzuentwickeln, so daß die Anpassung an die fahrzeuge - Motor, Getriebe - sowie an die vorgesehenen Fahrbedingungen einfacher möglich ist.

Diese Aufgabe wird mit den kennzeichnenden Merkmalen vom Anspruch 1 erfüllt.

Mit einem Bewertungskennfeld, das in Form einer Matrix dem Motorkennfeld überlagert ist, kann in einfacher Weise der jeweilige Betriebspunkt nicht nur schnell ermittelt werden, sondern es ist auch zu erkennen, ob bei der gegebenen Lastanforderung ein gewünschtes Optimum, z. B. der geringste spezifische Verbrauch, erzielt wird. Über die Bewertung der Matrix kann auch schnell der geeignete Gang, der diese Bedingung erfüllt, gefunden werden, wobei die Berücksichtigung der Beschleunigung auch in Form eines Vergleiches von Soll- und Isth-Beschleunigung und der Beschleunigungsänderung - Beschleunigungsgradient - zur Gangfindung geeignet ist, eine zu hohe Schalthäufigkeit zu unterbinden. Mit dieser Anordnung und dem Vergleich zwischen Motor und Bewertungskennfeld vereinfacht sich nicht nur der Ablauf in der Steuereinrichtung, sondern auch die Anpassung der Steuerung an verschiedene Fahrzeuge, weil die in Frage kommenden Motorkennfelder zur Verfügung stehen und nur noch die Zuordnung der Beschleunigung/Verzögerung zur erforderlichen Bewertungsänderung untersucht werden muß. Der größte Teil des schaltprogrammes ist darüber hinaus motor- und getriebeabhängig, so daß Fahrzeuganpassungen nur durch eine andere Beschleunigung/Verzögerung oder des entsprechenden Gradienten einfach und schnell erfolgen. Das ganze Fahrzeug mit Achse, Rädern, Masse usw. wird indirekt bei der Schaltpunktwahl berücksichtigt, ohne daß sie als eine Rechengröße berücksichtigt werden müssen und Fahrwiderstände werden gleichfalls indirekt berücksichtigt. Die gesamte Fahrzeugdynamik kann über die Bewertung und z. B. eine Korrekturkurve, in der die beschleunigung bzw. die Beschleunigungsänderung berücksichtigt wird, allen Wünschen leicht und mit wenig Aufwand angepaßt werden. Besondere Vorteile ergeben sich, wenn das Motorkennfeld für den spezifischen Kraftstoffverbrauch über der Drehzahl und der Leistung aufgetragen ist, weil in Verbindung mit dem bekannten Leistungspedal das nicht gewünschte Schaltpendeln und nicht gewünschte Leistungssprünge verhindert werden können. Die vorgesehene Kraftstoffeinsparung erfolgt auch ausschließlich durch die Anpassung der Gangschaltung an das Kennfeld unter Berücksichtigung der vom Fahrer gewollten Leistung und nicht durch Leistungsbeschränkung entgegen dem Fahrerwunsch.

Eine Umstellung auf andere Bewertungskriterien, z. B. Abgaskennwerte im Zugbetrieb bzw. Sicherheitsbedingungen im Schubbetrieb, oder auf eine Kombination von Bewertungskriterien ist gleichfalls in einfacher Weise möglich. Die Steuereinrichtung kann auch in Verbindung mit einem Automatgetriebe und einem Motor, der über ein einfaches Gaspedal geführt wird, zur Anwendung kommen. Die in Prozent aufgetragene Gaspedalverstellung auf der Ordinate basiert zweckmäßigerweise auf einem Momentenkennfeld, weil in diesem Kennfeld das Drehmoment in etwa proportional mit der Betätigung des Gaspedals wächst und von einer steigenden Drehzahl - Abszisse - nur geringfügig beeinflußt wird, während die Leistung mit steigender Drehzahl abfällt, so daß Schaltpendeln nicht absolut vermeidbar ist.

Weiterhin ist besonders vorteilhaft, wenn das Bewertungskennfeld gitterartig das Motorkennfeld überdeckt, z. B. in einer 16er Teilung für die praktisch wirkenden Drehzahlen, z. B. 700 bis 2 500 U/min, und einer gleichen Einteilung für den Verstellweg oder - winkel des Gas- oder Leistungspedals, wobei die letztgenannte Einteilung aie max. Leistung bzw. das max. Drehmoment unterteilt. Die so entstehenden Felder, z. B. 16 x 16 = 256, lassen eine genügend feine Bewertung sowohl in der Gaspedalstellung wie auch im Drehzahlbereich zu.

Mit der Einbeziehung der Beschleunigung/Verzögerung oder auch der Beschleunigungs-/Verzögerungsänderung in die Ermittlung eines evtl. neu zu schaltenden Ganges wird die dynamische Fahrweise erhöht und es kann im Sinne eines Vorhaltens eine nicht gewollte Schalthäufigkeit verhindert werden. Dem gleichen Zweck dient noch die Einbeziehung der Schaltzeit für dien errechneten Gangsprung bzw. die Einhaltung einer Sperrzeit bei einem Wechsel in der Gaspedalstellung.

Die im Speicher des elektrischen Steuergerätes abgelegten unterschiedlichen Bewertungskennfelder können, einer Logik folgend, automatisch, aber auch von außen, z. B. manuell, oder von einem anderen Signal aus für die Schaltpunkt- und Gangermittlung ausgewählt werden.

Während die Bewertung im Bewertungskennfeld grundsätzlich z. B. den minimalen spezifischen Kraftstoffverbrauch oder anderen Bewertungen folgt, ist es durch eine Abweichung von diesem Grundsatz auch möglich, durch Schwingungen gefährdete Bereiche vom praktischen Fahrbetrieb auszusparen.

Werden neben dem Bewertungskennfeld für den Zugbetrieb zur Schaltpunkt- und Gangermittlung auch dem Schubbetrieb Bewertungskennfelder zugeordnet, ist es möglich, in einfacher Weise Gangumschaltungen, aber auch das Halten eines Ganges, z. B. aus Sicherheitsgründen, zu bewirken.

Und schließlich kann die Steuereinrichtung sehr leicht an die jeweiligen Anforderungen eines Fahrzeuges angepaßt werden. So kann in Abhängigkeit des Leistungsgeweichtes, z. B. bei einem schweren Nutzfahrzeug, neben der Beschleunigung zur Korrektur des Schaltpunktes noch ein Soll-Ist-Vergleich der Beschleunigung und noch der Beschleunigungsgradient (Beschleunigungsänderung) berücksichtigt werden, während bei einem Reisebus mit gleicher Motorisierung die Beschleunigung in Form eines Soll-Ist-Vergleiches ausreichend sein kann.

Aus der DE-A 33 04 847 ist eine Schaltungsanordnung zur Erzeugung eines Hochschaltsignales bekannt, um eine möglichst optimale Kraftstoffeinsparung zu erhalten. Dazu wird der tatsächliche Kraftstoffverbrauch über einen Kraftstoffverbrauchsmesser und die jeweilige Drehzahl über einen Drehzahlgeber ermittelt. In einer elektronischen Steuerschaltung ist das Leistungs-Drehzahl-Kennlinienfeld der Brennkraftmaschine abgespeichert und in einen günstigen und ungünstigen Arbeitsbereich aufgeteilt. Aus Signalen des Drehzahlgebers und des Kraftstoffverbrauchsmessers ermittelt die Steuerschaltung den jeweiligen Betriebszustand und gibt, je nach dem Bereich im Kennlinienfeld, ein Hoch.schaltsignal ab.

Weitere Einzelheiten der Erfindung werden anhand von Zeichnungen und an einem Ausführungsbeispiel erläutert. Es zeigen:

Fig. 1 eine Steuereinrichtung in schematischer Darstellung;

Fig. 2 ein Motorkennfeld für der. spezifischen Kraftstoffverbrauch, über der Drehzahl und der Leistung aufgetragen sowie mit einem Bewertungskennfeld;

Fig. 3 ein Motorkennfeld nach Fig. 2, mit einem gitterartigen Bewertungskennfeld überdeckt;

Fig. 4 ein Motorkennfeld mit dem spezifischen Kraftstoffverbrauch über der Drehzahl und der Gaspedalstellung, abgeleitet von einem Mitteldruck-Momentenkennfeld und einem gitterartigen Bewertungskennfeld;

Fig. 5 einen Flußplan zur Ermittlung der Schaltpunkte und Schaltbefehle.

Fig. 6 eine Ergänzung zum Flußplan nach Fig. 5 in bezug auf die Korrekturkurven K1/1 bis K2/2.

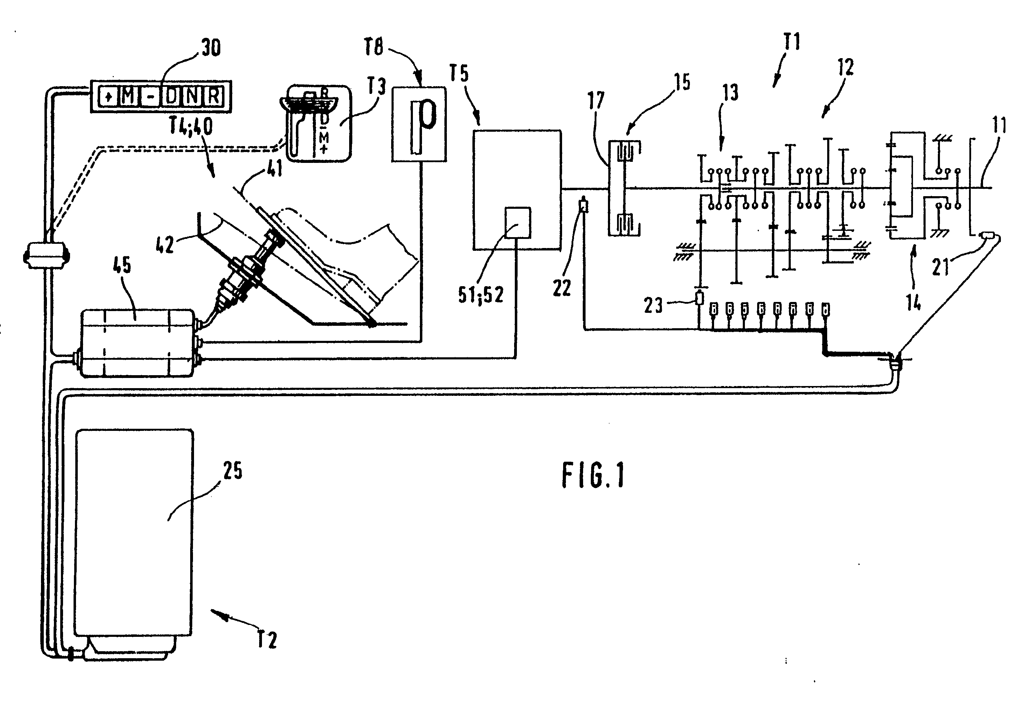

Das in Fig. 1 dargestellte Stufenwechselgetriebe T1 ist ei.n 16gängiges Synchrongetriebe und besteht aus einem 4gängigen vom Motor T5 - Sensor 22 - und die Getriebeeingangsdrehzahl, die z. B. am Zahnrad auf der Vorgelegewelle von der ersten Konstanten - Sensor 23 - abgenommen wird. Das elektronische Steuergerät T2 hat noch einen Speicher 25 und der Wählschalter T3, 30 kann z. B. als Konsolienschalter T3 oder Drucktastenschalter 30 ausgebilder sein und hat die Stellungen R (Rückwärtsfahrt) sowie N (Neutral) und D (Vorwärtsfahrt) für den automatischen Bereich. Zur Umschaltung auf einen manuellen Fahrbetrieb - Gänge werden vom Fahrer aus geschaltet - sind noch die Stellung M sowie die Stellungen plus und minus vorgesehen, wobei bei M der von der Automatik geschaltete Gang gehalten wird. Bei jeder Verstellung von M auf minus bzw. M auf plus wird zurück- oder hochgeschaltet. Die Gashebelstellung von Gas- oder Leistungspedal T4, 40 mit der Leergasstellung 41 und Vollgasstellung 42 wird stufenlos in die elektronische Einheit T2 eingegeben, wobei zwischen Gashebel ung elektronischem Steuergerät T2 noch eine E-Gas- oder eine EDC-Anlage 45 angeordnet ist, so daß das Gaspedal T4 z. B. auch als Leistungspedal 40 wirken kann. Mit T5 ist noch der Antriebsmotor und mit 51 und 52 die Drosselklappe bzw. Einspritzpumpe dargestellt. Mit T8 ist ein Bremsschalter bezeichnet, der zur Anforderung der Bremsleistung angeordnet ist und auch als Bremspedal, vergleichbar mit dem Gaspedal T4, ausgeführt sein kann. Zur Aktivierung der in einem schweren Nutzfahrzeug vorhandenen unterschiedlichen Bremseinrichtungen, z. B. Retarder, Motorbremse, Betriebsbremse, kann neben dem Bremspedal auch zusätzlich ein Bremsschalter für z. B. die Motorbremse bzw. den Retarder, vorhanden sein.

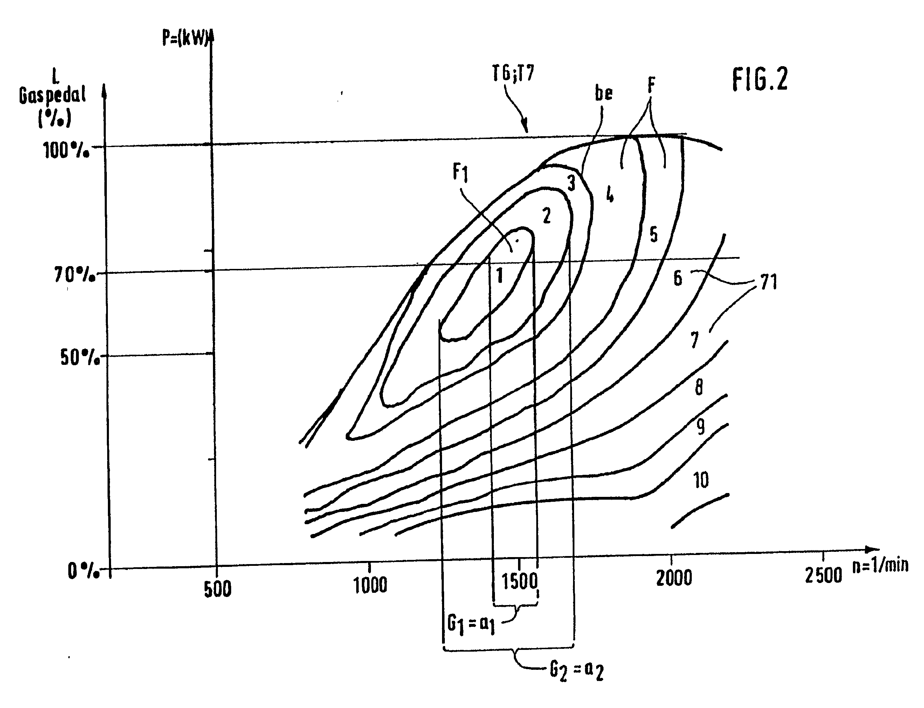

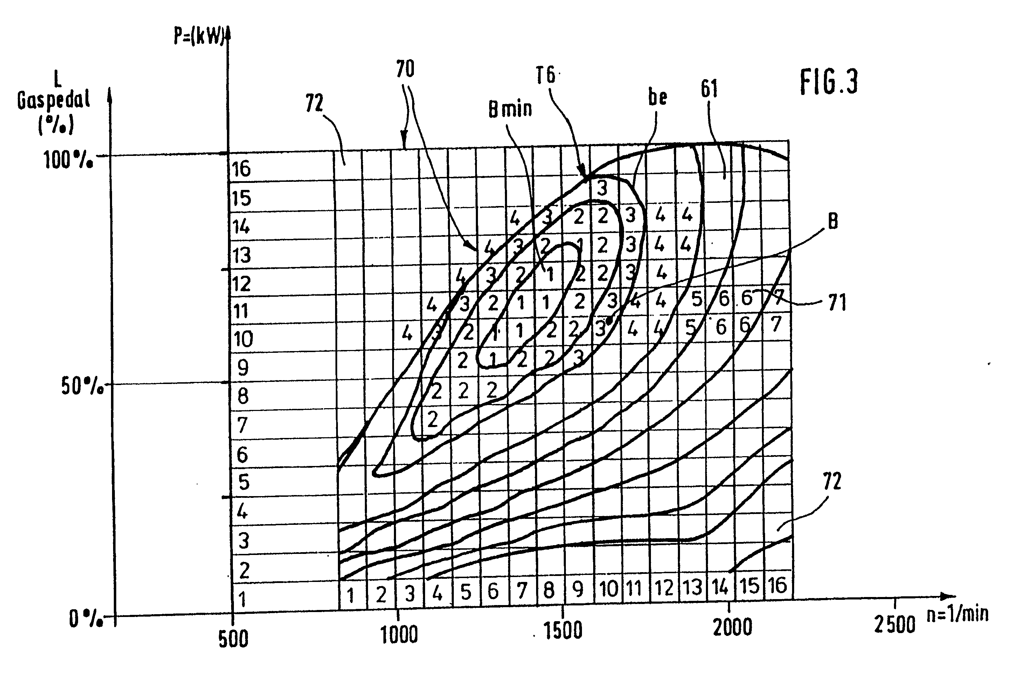

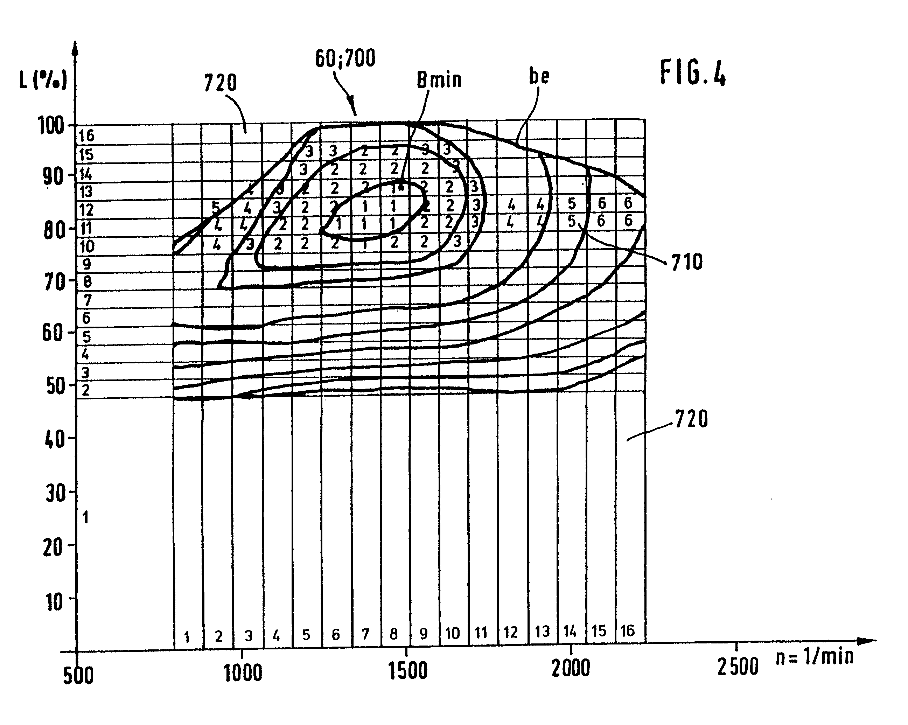

Je nachdem, ob die Motorelektrik - elektronische Einheit 45 - das Gaspedalsignal als Drehmomentwunsch oder als Leistungswunsch des Fahrers bearbeitet, muß das Momentenkennfeld - Fig. 4 - oder das Leistungskennfeld - Fig. 2 und 3 - zugrunde gelegt werden.

Hat z. B. ein Fahrzeug zur Führung der Motorleistung ein Leistungspedal 40 in Verbindung mit einer elektronischen Einheit 45 und soll das Fahrzeug möglichst mit einem günstigen Kraftstoffverbrauch gefahren werden so ist es zweckmäßig, ein Motorkennfeld für den spezeifischen Verbrauch auszuwählen, bei dem die Verbrauchskennlinie über der Motordrehzahl n und der Leistung P nach Fig. 2 aufgetragen ist. In dem Koordinatensystem sind auf der Abszisse (X-Achse) die Drehzahlen n von 0 bis 2 500 U/min und auf der Ordinate (Y-Achse) die Leistung P von 0 bis 100 % aufgetragen. Die Kurven des gleichen spezifischen Kraftstoffverbrauches be sind, wie bekannt, muschelartig angeordnet, die erzielbare Leistung von 0 bis zur Höchstleistung von 100 % wird über die Betätigung des Leistungspedals erzielt, wobei die Leistung, wie die zweite Unterteilung auf der Y-Achse erkennen läßt, proportional dem Winkel oder dem Weg 41 bis 42 der Verstellung des Leistungspedals 40 ist, so daß z. B. 70 % Weg vom Leistungspedal 40 auch einer 70%igen Leistung P von Motor T5 entspricht. Dem Motorkennfeld in Fig. 2 ist ein Bewertungskennfeld so überlagert, daß Bewertungsziffern 71 von 1 bis 10 jeweils in dne Feldern F zwischen den Kurven be angeordnet sind, wobei das Feld F1 mit dem geringsten spezifischen Verbrauch mit 1 und das Feld mit dem höchsten spezifischen Verbrauch mit 10 bewertet ist. bei einer Lastanforderung von z. B. 70 % ist drehzahlabhängig der Betriebspunkt in den Feldern 1 bis 6 möglich. Eine Schaltung wird also immer dann hervorgerufen, wenn die Bewertung für den ermittelten Betriebspunkt B höher ist als 1 und die Drehzahldifferenz zumindest einen Gangsprung ausmacht. Um eine zu hohe Schalthäufigkpit zu vermeiden, wird noch in die Gangsprungermittlung die Beschleunigung/Verzögerung a des Fahrzeuges einbezogen, so daß bei aeringer Beschleunigung a1 sich kleine Schaltgrenzen G1 und bei einer großen Beschleunigung/Verzögerung a2 sich größe Schaltgrenzen bzw. Gangsprünge ergeben.

In Fig. 3 ist das Motorkennfeld nach Fig. 2 besonders günstig mit einem Bewertungskennfeld 70 gitterartig abgedeckt, wobei das Gitter in Richtung der Y-Achse den max. Stellwert des Leistungspedals 40 von 0 bis max. in 16 gleiche Felder teilt. Auch die praktisch wirksame Drehzahl von z. B. 800 U/min bis ca. 2 200 U/min wird in 16 Felder eingeteilt, so daß sich im gesamten Bewertungskennfeld 16 x 16 = 256 Felder 72 ergeben. Über die beiden Informationen Motordrehzahl n und Lastanforderung L ist aufgrund der Unterteilung im Bewertungskennfeld von 1 bis 16 in jeder Richtung in einfacher Weise die Lage des Betriebspunktes B im Kennfeld, z. B. Feld 10/10, zu ermitteln und der angenäherte Drehzahlabstand zum minimalen spezifischen Verbrauch Bmin im inneren Auschelfeld zu erkennen. Durch eine Schaltung - Hochschaltung - unter Berücksichtigung der Beschleunigung/Verzögerung wird dieser Abstand beseitigt, wobei die Beschleunigung so wirken kann, daß zunächst der zu schaltende Gangsprung größer ermittelt wird, so daß erst nach Ablauf der Schaltung der Betriebspunkt B sich in einem Feld mit der tiefsten Bewertung befindet. Bei der Verwendung des Leistungskennfeldes nach den Fig. 2 und 3 und einer Motorführung über eine Elektronik 45 in Verbindung mit einem Leistungspedal 40 kan das nicht gewünschte, sogenannte Schaltpendeln verhindert werden.

Steht aber nur eine übliche Motorführung über ein Gaspedal mit einer E-Gas-Einrichtung zur Verfügung, so ist es zweckmäßig, ein Kennfeld nach Fig. 4 zu benützen, in dem der minimale spezifische Verbrauch be über der Drehzahl - X-Achse - und der Gaspedalstellung, abgeleitet vom Motormoment - Y-Achse -, aufgetragen ist. Die Einteilung und Bewertung kann, wie in Fig. 3 dargestellt und in dieser Fig. beschrieben, in gleicher Weise erfolgen.

Über eine hohe Bewertung 1 bis 10 im Bewertungskennfeld 7, 70, 700 ist es möglich, bestimmte, z. B. schwingungsgefährdete Bereiche vom Motorkennfeld T6, 60 von dem praktischen Fahrbetrieb auszusparen. Diese Bereiche können über die Motordrehzahl bzw. über Drehzahlbereiche und die Lastanforderung bzw. über Lastanforderungsbereiche definiert sein.

Der Antriebsstrang eines Fahrzeuges muß aber nicht nur in dem Betriebszustand mit Motorlast - Lastanforderung über Gas- oder Leistungspedal T4, 40 - vom Getriebe über einen geeigneten Gang in vorteilhafter Weise an die jeweilige Fahrsituation angepaßt werden, sondern es ergeben sich auch noch unterschiedliche Betriebszustände im Schubbetrieb über ein geeignetes Bewertungskennfeld, das z. B. dem

Schub ohne Bremse,
Schub mit Bremsung Retarder,
Schub mit Bremsung Motorbreise,
Schub mit Bremsung Betriebsbremse

oder auch Kombinationen dieser Betriebszustände zugeordnet ist und in diesen auch wirkt, kann jede Gangschaltphilosophie einfach verwirklicht werden. Anstelle der Leistungsanforderung - Motorleistung/Motormoment - tritt zur Gestaltung des Bewertungskennfeldes neben der Motordrehzahl dann nur der jeweilige Betriebszustand und der Grad einer vom Fahrer über eine Betätigungseinheit T8 - auch ein Bremspedal - gewünschten Bremsleistung bzw. Bremswirkung.

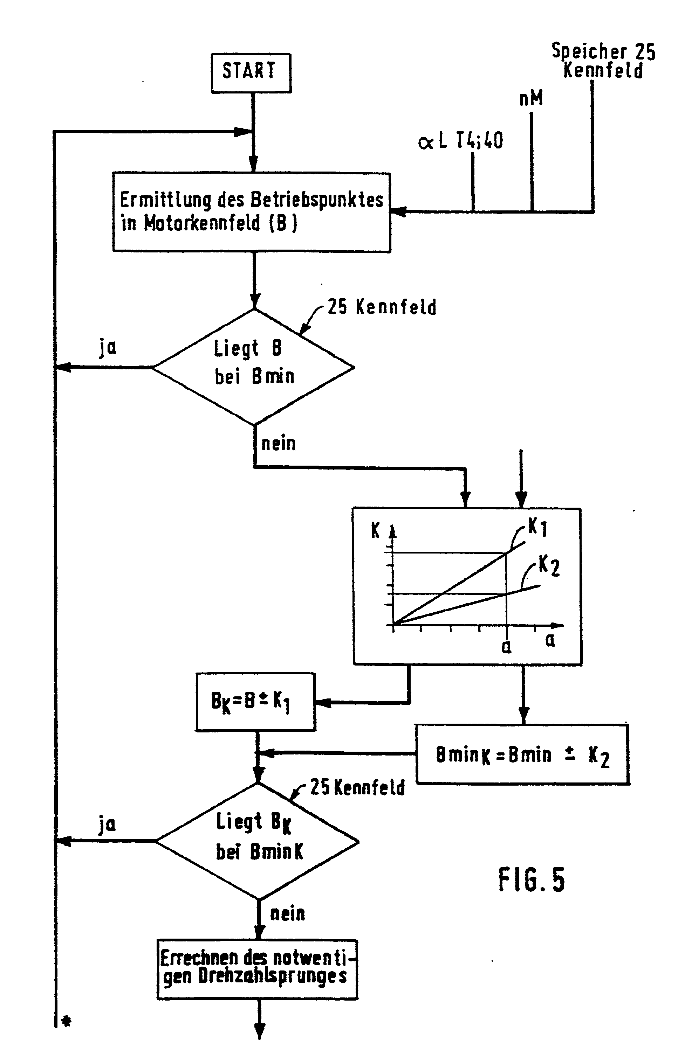

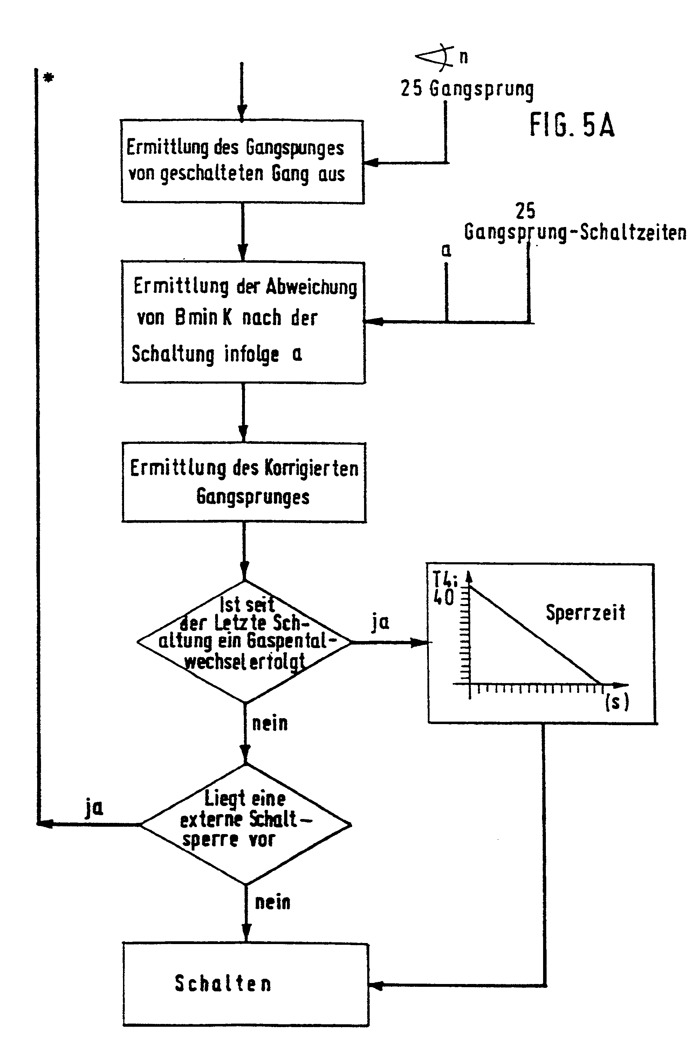

Anhand eines Flußplanes nach Fig. 5 soll der Ablauf einer selbsttätigen Gangschaltung erläutert werden. Bei der Verstellung des Wählhebels/Wählschalters T3, 30 von N (Neutral) - wobei in dieser Stellung der Motor T5 angelassen wurde - in die Vorwärtsfahrtstellung D wird normal über das elektronische Steuergerät T2 z. B. der dritte Gang eingelegt. Ist dieser Gang nicht geeignet für das befahren, so kann der Fahrer, wie bekannt, über die Tasten M und minus auch einen tieferen Gang einlegen. Im elektronischen Steuergerät T2 werden Schaltpunkte und Gangermittlung für Zug- und Schubschaltungen automatisch ermittelt, wenn der Fahrer den Fahrschalter in die Stellung Vorwärtsfahrt - D - betätigt. Mit Hilfe des bewerteten Kennfeldes T6, 70, z. B. nach Fig. 3, das im Speicher 25 des elektronischen Steuergerätes T2 abgelegt ist, und der Information aus der Motordrehzahl nM von Sensor 22 und der Stellung des Gas- oder Leistungspedals T4, 40 wird im elektronischen Steuergerät T2 der Betriebspunkt B im Motorkennfeld ermittelt. Liegt dieser Betriebspunkt infolge der kleinsten Bewertung, z. B. 1, bei Bmin - kleinster spezifischer Verbrauch -, wird die Ermittlung des Betriebspunktes wiederholt. Weicht jedoch der ermittelte Betriebspunkt B von einem Feld mit der tiefsten Bewertung ab, wird nunmehr die Beschleunigung zur Erlangung eines korrigierten Betriebspunktes BK mitberücksichtigt. Dazu ist im Speicher 25 des elektronischen Steuergerätes T2 eine erste Korrekturkurve K1 abgelegt, mit deren Hilfe aus der Ist-Beschleunigung/-Verzögerung ein Korrekturfaktor ermittelt und zur Bewertung vom Betriebspunkt B addiert wird (korrigierter Betriebspunkt BK = B ±K1) - bevor nunmehr der Drehzahlunterschied zwischen Bmin und BK ermittelt wird, wird über eine zweite Korrekturkurve K2 ein zweiter Korrekturfaktor in gleicher Weise zu Bmin addiert, so daß sich Bmin K, also ein in Funktion der Beschleunigung korrigierter Betriebspunkt ergibt - Bmin K = Bmin ±K2 -. Nunmehr wird der korrigierte Betriebspunkt BK mit dem korrigierten Betriebspunkt für den minimalen Verbrauch Bmin K verglichen; stimmen diese beiden Werte überein, wird keine Gangschaltung eingeleitet, sondern die Ermittlung des Betriebspunktes beginnt wieder von neuem. Bei Nichtübereinstimmung wird nunmehr der erforderliche Drehzahlsprung und unter Berücksichtigung einer Gangsprungablage im Speicher der notwendige Gangsprung vom geschalteten Gang aus ermittelt. Vor einer Schaltung wird noch zur Ermittlung des korrigierten Gangsprunges die Schaltzeit und die Beschleunigung während der Schaltzeit mit einbezogen, wobei die Gangsprungschaltzeiten für alle möglichen Gangsprünge im Speicher abgelegt sind. Wie aus dem Flußplan erkennbar, kann noch eine Sperrzeit berücksichtigt werden, wenn seit der letzten Schaltung ein Gaspedalwechsel erfolgte.

Die Gangsprungschaltzeiten können im Bedarfsfalle auch adaptiv geführt werden. Vor der endgültigen Schaltung kann auch noch eine Abfrage erfolgen, ob außerhalb der Schaltsteuerung ein Signal anliegt, daß eine Schaltung verhindert werden soll - z. B. eingeschaltete Motorbremse -.

In den Ablauf kann auch noch eine gespeicherte Logik einbezogen werden, nach der unterschiedliche, im Speicher abgelegte Bewertungskennfelder T7, 70, 700 zur Schaltpunkt- und Gangermittlung ausgewählt werden oder die unterschiedlichen Bewertungskennfelder, z. B. nach dem spezifischen Verbrauch oder den Abgaswerten, können auch von außen manuell oder in Abhängigkeit von einem anderen Signal wahlweise eingeschaltet werden. Der Flußplan zeigt nur den grundsätzlichen Ablauf, während steuerungstechnische und elektronisch bedingte Abläufe nicht dargestellt worden sind.

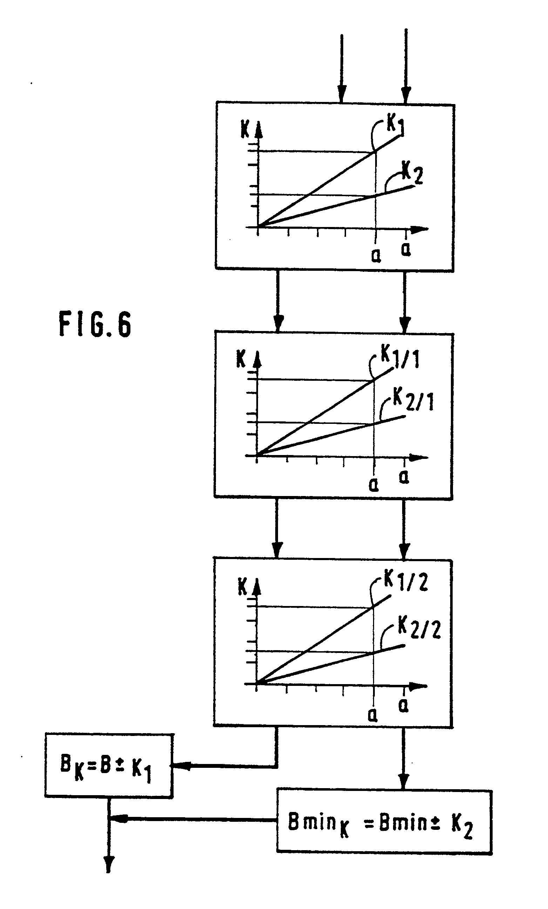

In der Fig. 6 ist der Flußplan nach Fig. 5 erweitert, um das Problem der Schalthäufigkeit und des günstigen Fahrbereiches in Verbindung mit dem Fahrstreckenprofil - unterschiedliche Steigung bzw. unterschiedliches Gefälle - bei schweren Nutzfahrzeugen besser lösen zu können. Während nach Fig. 5 nur die Beschleunigung/Verzögerung in der beschriebenen Weise über die Korrekturkurve K1 und K2 für die Schaltpunkt- und Gangermittlung berücksichtigt wird, erfolgt nach Fig. 6 noch zusätzlich ein Vergleich der Soll- und Ist-Beschleunigung/ -Verzögerung K1/1 und K2/1 sowie die Berücksichtigung der Beschleunigungs- und Verzögerungsänderung bzw. des Beschleunigungs- und Verzögerungsgradienten K1/2, K2/2. Besonders bei schweren Nutzfahrzeugen mit einer hohen Beladung, bei dem das Fahrstreckenprofil, z. B. Übergang von der Ebene in einen Berg, sehr hohen Einfluß auf die Schalthäufigkeit ausübt, kann diese über die Berücksichtigung der Beschleunigungs- bzw. Verzögerungsänderung in vertretbaren Grenzen gehalten werden, wobei in Abhängigkeit vom Leistungsgewicht des Fahrzeuges auch nicht alle in Fig. 6 aufgezeigten Schritte der Korrektur K1/K2 bis K1/2 und K2/2 zur Anwendung kommen müssen.

Durch den Gradient aus der Beschleunigung bzw. Verzögerung wird die Streckenänderung rechtzeitig erkannt, was bei Einfahrten in große Steigungen oder in ein großes Gefälle, also auch in extremen Fahrsituationen, eine gute Ganganpassung bei einer vertretbaren Schaltäufigkeit ergibt.

## Patentansprüche

1. Steuereinrichtung zum selbsttätigen Schalten von Stufenwechselgetrieben (T1) in Kraftfahrzeugen oder zur Ermittlung von Schaltempfehlungen für ein solches Getriebe mit einem elektronischen Steuergerät (T2) zur Ermittlung der Schaltpunkte und der zu schaltenden Gänge, wobei dem elektronischen Steuergerät (T2) über Sensoren (21 bis 23) Informationen über zumindest die Motor- und Getriebeausgangsdrehzahlen (21, 22) sowie die Lastanforderung (L) - Gaspedalstellung - fortwährend zugeleitet und mit gespeicherten Informationen vom elektronischen Steuergerät (T2) verarbeitet werden und über die Schaltpunktermittlung und die Gangauswahl zu einer vorteilhaften Anpassung des Antriebsstranges an die jeweilige Fahrsituation führen, wobei im elektronischen Steuergerät (T2) ein Motorkennfeld (T6, 60) für den Kraftstoffverbrauch abgespeichert ist und über die Motordrehzahl (nM) und die Motorleistung und unter Einbeziehung der Beschleunigung die Schaltpunkte für eine Schaltung festgelegt werden, dadurch **gekennzeichnet** , daß dem Motorkennfeld (T6, 60) ein Bewertungskennfeld (T7, 70, 700) in Form einer Matrix überlagert ist und daß durch die Kurven (be) des Motorkennfeldes (T6) in Verbindung mit der Bewertung (71, 710) aus dem Bewertungskennfeld (T7, 70, 700) und einer Lastanforderung (L) über das Gas- oder Leistungspedal (T4, 40) im Zugbetrieb oder einer Verzögerungsanforderung über eine Bremsbetätigung (Bremsschalter/Bremspedal T8) im Schubbetrieb die Schaltpunkte und die zu schaltenden Gänge ermittelt werden und daß die Einteilung des Verstellweges/Winkels (L) vom Leistungs- oder Gaspedal (T4, 40) im Zugbetrieb und der Bremsbetätigungseinrichtung (T8) im Schubbetrieb feinmaschig erfolgt und daß die Felder (72, 720) der Matrix (71, 710) des Bewertungskennfeldes bewertet werden und daß die Bereiche (61) vom Motorkennfeld (T6) mit dem gleichen spezifischen Kraftstoffverbrauch (be) in den Feldern (72, 720) vom Bewertungskennfeld (70, 700), die diesen Bereich abdecken, die gleiche Bewertung erhalten und daß über Bewertungswechsel Gangschaltbefehle ausgelöst werden und daß im elektronischen Steuergerät (T2) noch eine Kennlinie (K1) abgelegt ist, mit deren Hilfe beschleunigungs- und verzögerungsabhängig die ermittelten Gänge für den Schaltbefehl verschoben werden.

2. Steuereinrichtung nach Anspruch 1, dadurch **gekennzeichnet** , daß das Motorkennfeld (T6) ein über der Drehzahl (n) und der Leistung (P) aufgetragenes Kennfeld für den spezifischen Kraftstoffverbrauch (be) ist.

3. Steuereinrichtung nach Anspruch 1, **dadurch gekennzeichnet**, daß das Bewertungskennfeld (70, 700) gitterartig das gesamte Motorkennfeld (Fig. 3 und Fig. 4) überdeckt, wobei die Felder (72, 720) des Gitters in der einen Richtung - Ordinate - von einer Unterteilung des maximalen Verstellweges, z. B. in 16 Felder, vom Gas- oder Leistungspedal (T4, 40) und in der anderen Richtung - Abszisse - von einer Unterteilung des praktisch wirksamen Drehzahlbereiches (n) vom jeweiligen Motor (T5) gebildet werden.

4. Steuereinrichtung nach Anspruch 1, **dadurch gekennzeichnet**, daß mit dem Wert der Beschleunigung/Verzögerung über eine erste Kennlinie (K1) der Korrekturfaktor festgelegt und zur für den Betriebspunkt (B) ermittelten Bewertung addiert wird und daß ein Korrekturfaktor, der über eine zweite Kennlinie (K2) ermittelt wird, zu einem berichtigten Bereich für den minimalen spezifischen Kraftstoffverbrauch (Bmin K) führt.

5. Steuereinrichtung nach Anspruch 4, **dadurch gekennzeichnet**, daß die Schaltzeit für einen ermittelten Gangsprung unter Berücksichtigung der Beschleunigung/Verzögerung in die Ermittlung des zu schaltenden Gangsprunges einbezogen wird.

6. Steuereinrichtung nach Anspruch 1, **dadurch gekennzeichnet**, daß der Schaltpunkt und der jeweils zu schaltende Gang in folgendem belauf ermittelt wird:

– Ermittlung des Betriebspunktes (B) im Motorkennfeld, wobei das Kennfeld im Speicher (25) abgelegt und die Motordrehzahl (nM) sowie die Stellung des Gas- oder Leistungspedals (T4, 40) entsprechend der gerade bestehenden Fahrbedingung ermittelt wird;

– Ermittlung, ob der Betriebspunkt (B) im Bereich des minimalen Verbrauchs (Bmin) liegt mit Hilfe des im Speicher (25) abgelegten, bewerteten Kennfeldes;

– bei Übereinstimmung wird die Ermittlung des Betriebspunktes solange wiederholt, bis eine Abweichung von Betriebspunkt (B) zum Bereich des minimalen spezifischen Kraftstoffverbrauchs (Bmin) eintritt;

– Berücksichtigung der gerade anliegenden Beschleunigung/Verzögerung (a) über eine im Speicher abgelegte Kennlinie (K1) zur Ermittlung eines Korrekturfaktors und Errechnung eines korrigierten Betriebspunktes (BK) aus 9 ±K1;

– Ermittlung eines korrigierten Bereiches für den minimalen spezifischen Kraftstoffverbrauch (Bmin K) aus dem Bereich für den minimalen Kraftstoffverbrauch (Bmin) und einem zweiten Korrekturfaktor aus der Kurve (K2) (Bmin K = Bmin ±K2);

– Ermittlung, ob BK bei Bmin K liegt, wobei bei "ja" die Ermittlung des Betriebspunktes von vorne beginnt und bei "nein" der sich aus dem Bewertungsunterschied ergebende Drehzahlunterschied errechnet wird;

– Ermittlung des notwendigen Gangsprunges vom geschalteten Gang aus unter Berücksichtigung des im Speicher (25) abgelegten Drehzahlbereiches ( n) für den vorgesehenen Gangsprung;

– Ermittlung der Abweichungen vom berichtigten Bereich des minimalen Verbrauches, der sich ergeben würde nach der vollzogenen Schaltung unter Berücksichtigung der jeweiligen Gangsprungschaltzeiten und der gerade anliegenden Beschleunigung, wobei die Gangsprungschaltzeiten im Speicher (25) abgelegt sind;

– Ermittlung des korrigierten Gangsprunges;

– Berücksichtigung einer Sperrzeit, wenn zwischen der letzten Schaltung sich eine Veränderung der Gas- bzw. Leistungspedalstellung (L) ergeben hat.

7. Steuereinrichtung nach Anspruch 1, **dadurch gekennzeichnet**, daß als Bewertungsbasis für das Bewertungskennfeld außer dem spezifischen Kraftstoffverbrauch (be) auch andere Größen, wie z. B. Emissionskennfelder oder auch die Kombination von verschiedenen Parametern, gewählt werden.

8. Steuereinrichtung nach Anspruch 7, **dadurch gekennzeichnet**, daß im elektrischen Steuergerät (T2) verschiedene Bewertungskennfelder (T7, 70, 700) abgelegt sind und nach einer vorgegebenen Logik wirksam oder über ein Signal von außen umgeschaltet werden.

9. Steuereinrichtung nach Anspruch 1, **dadurch gekennzeichnet**, daß durch eine gezielte Bewertung (1 bis 10) im Bewertungskennfeld (7, 70, 700) ausgewählte Bereiche vom Motorkennfeld (T6, 60) für den praktischen Fahrbetrieb ausgespart werden.

10. Steuereinrichtung nach Anspruch 8, **dadurch gekennzeichnet**, daß im Schubbetrieb die Bewertungskennfelder (7, 70, 700) in Abhängigkeit von Betriebszuständen - z. B. Schub, Schub mit Strömungsbremse; Schub mit Motorbremse, Schub mit Reibungsbremse; ABS - oder auch Kombinationen daraus erstellt sind und ausgewählt werden, wobei die Bewertungskennfelder von der Motordrehzahl (nM) in Verbindung mit der gewünschten Bremsleistung dargestellt sind.

11. Steuereinrichtung nach Anspruch 1, **dadurch gekennzeichnet**, daß die Schaltpunkte und die zu schaltenden Gänge aus einem Vergleich zwischen der Soll- und der Ist-Beschleunigung (Kurven K1/1, K2/1) ermittelt werden.

12. Steuereinrichtung nach Anspruch 1, **dadurch gekennzeichnet**, daß die Schaltpunkte und die zu schaltenden Gänge in Abhängigkeit von der Beschleunigungsänderung (Kurven K1/2, K2/2) ermittelt werden.

## Claims

1. Control device for automatically shifting variable - speed transmissions (T1) in motor vehicles or for determining gearshift recommendations for a transmission of this kind, with an electronic control unit (T2) for determining the shift points and the gears to be shifted, in which information regarding at least the engine and initial transmission speeds (21, 22) as well as the load requirement (L) - accelerator pedal position - is continuously supplied via sensors (21 to 23) to the electronic control unit (T2), processed with stored information by the electronic control unit (T2) and, through the determination of the shift points and the gear selection, result in an advantageous adaptation of the drive train to the respective driving situation, and in which an engine characteristic graph (T6, 60) for the fuel consumption is stored in the electronic control unit (T2) and the shift points for a gearshift operation are established via the engine speed (nM) and the engine power, including the acceleration, characterised in that a weighting characteristic graph (T7, 70, 700) in the form of a matrix is superimposed on the engine characteristic graph (T6, 60), that the shift points and the gears to be shifted are determined via the characteristic lines (be) of the engine characteristic graph (T6) together with the weighting (71, 710) from the weighting characteristic graph (T7, 70, 700) and a load requirement (L) via the accelerator or power pedal (T4, 40) in powered operation or a deceleration requirement via a brake operation (brake control switch/brake pedal T8) in overrun, that the displacement path/angle (L) of the power or accelerator pedal (T4, 40) in powered operation and the brake operating device (T8) in overrun are finely graduated, that the fields (72, 720) of the matrix (71, 710) of the weighting characteristic graph are weighted, that the areas (61) of the engine characteristic graph (T6) with the same specific fuel consumption (be) in the fields (72, 720) of the weighting characteristic graph (70, 700) which cover this area receive the same weighting, that gearshift commands are triggered via weighting changes, and that a characteristic line (K1) is also stored in the electronic control unit (T2), by means of which line the determined gears for the shift command are moved according to the acceleration and deceleration.

2. Control device according to claim 1, characterised in that the engine characteristic graph (T6) is a characteristic graph for the specific fuel consumption (be) which is plotted against the speed (n) and the power (P).

3. Control device according to claim 1, characterised in that the weighting characteristic graph (70, 700) covers the entire engine characteristic graph in the manner of a grid (Figures 3 and 4), the fields (72, 720)) of the grid being formed in one direction - that of the ordinate - by dividing the maximum displacement path of the accelerator or power pedal (T4, 40), e.g. into 16 fields, and in the other direction - that of the abscissa - by dividing the effective speed range (n) of the respective engine (T5).

4. Control device according to claim 1, characterised in that the correction factor is established with the value of the acceleration/deceleration via a first characteristic line (K1) and added to the weighting determined for the operating point (B), and that a correction factor which is determined via a second characteristic line (K2) results in a corrected range for the minimum specific fuel consumption (Bmin K).

5. Control device according to claim 4, characterised in that the shift duration for a determined gear change interval is included in the determination of the gear change interval to be shifted, taking account of the acceleration/deceleration.

6. Control device according to claim 1, characterised in that the shift point and the respective gear to be shifted are determined in the following sequence:

- determining the operating point (B) in the engine characteristic graph, the characteristic graph being stored in the memory (25) and the engine speed (nM) and position of the accelerator or power pedal (T4, 40) being determined according to the existing driving condition;
- determining whether the operating point (B) lies in the range of the minimum consumption (Bmin) by means of the weighted characteristic graph stored in the memory (25);
- if these coincide, the determination of the operating point is repeated until the operating point (B) deviates from the range of the minimum specific fuel consumption (Bmin);
- taking account of the applied acceleration/deceleration (a) via a characteristic line (K1) stored in the memory to determine a correction factor and calculate a corrected operating point (BK) from B ± K1;
- determining a corrected range for the minimum specific fuel consumption (Bmin K) from the range for the minimum fuel consumption (Bmin) and a second correction factor from the characteristic line (K2) (Bmin K = Bmin ± K2);
- determining whether BK lies at Bmin K, with the determination of the operating point beginning from the beginning if the answer is "yes" and the speed difference resulting from the weighting difference being calculated if the answer is "no";
- determining the required gear change interval from the shifted gear, taking account of the speed range (n) stored in the memory (25) for the intended gear change interval;
- determining the deviations from the corrected range of the minimum consumption which would result after carrying out the gearshift operation, taking account of the respective gear change interval shift durations and the applied acceleration, the gear change interval shift durations being stored in the memory (25);

– determining the corrected gear change interval;

– taking account of an inhibit time if there has been a change in the accelerator or power pedal position (L) since the last gearshift operation.

7. Control device according to claim 1, characterised in that, in addition to the specific fuel consumption (be), other quantities, such as emission characteristic graphs or a combination of various parameters, are selected as a weighting basis for the weighting characteristic graph.

8. Control device according to claim 7, characterised in that different weighting characteristic graphs (T7, 70, 700) are stored in the electronic control unit (T2) and effectively changed over according to a predetermined logic or via an external signal.

9. Control device according to claim 1, characterised in that selected areas of the engine characteristic graph (T6, 60) are reserved for practical automotive operation via a specific weighting (1 to 10) in the weighting characteristic graph (7, 70, 700).

10. Control device according to claim 8, characterised in that the weighting characteristic graphs (7, 70, 700) are drawn up and selected in overrun according to operating states - e.g. overrun, overrun with hydrodynamic brake; overrun with engine brake, overrun with friction brake; antilocking system - or a combination of these, with the weighting characteristic graphs of the engine speed (nM) being illustrated together with the desired braking power.

11. Control device according to claim 1, characterised in that the shift points and the gears to be shifted are determined on the basis of a comparison between the desired and actual acceleration (characteristic lines K1/1, K2/1).

12. Control device according to claim 1, characterised in that the shift points and the gears to be shifted are determined according to the change in acceleration (characteristic lines K1/2, K2/2).

## Revendications

1. Dispositif pour commander automatiquement des changements de vitesses dans des boîtes de vitesses graduelles (T1) de véhicules à moteurs ou pour déterminer des consignes de changement de vitesses pour une telle boîte, comportant un appareil électronique de commande (T2) pour déterminer les points de commutation et les vitesses à enclencher, et dans lequel des informations portant au moins sur les régimes de rotation (21, 22) du moteur et de la sortie de ladite boîte et sur la demande de charge (L) - position de la pédale des gaz - sont transmises en permanence par des capteurs (21 à 23) à l'appareil électronique de commande (T2), sont traitées par ledit appareil (T2) avec des informations mémorisées et conduisent à une adaptation avantageuse de la transmission à la situation de marche grâce à la détermination des points de communication et du choix des vitesses, l'appareil électronique de commande (T2) ayant en mémoire un champ caractéristique du moteur (T6, 60) pour la consommation de carburant et déterminant les points de commutation pour un changement de vitesses à partir du régime (nM) et de la puissance du moteur et en tenant compte de l'accélération, **caractérisé** en ce qu'un champ caractéristique de cotation (T7, 70, 700), formé par une matrice, est superposé au champ caractéristique du moteur (T6,60), en ce que les points de commutation et les vitesses à enclencher sont déterminés par les courbes (be) du champ caractéristique du moteur (T6) en combinaison avec la cote (71, 710) donnée par le champ caractéristique de cotation (T7, 70, 700) et, en traction, avec une demande de puissance (L) par la pédale des gaz ou de commande de puissance (T4, 40) ou, en poussée, avec une demande de ralentissement par une commande de freinage (commutateur ou pédale de frein T8), en ce que la graduation de la course ou de l'angle (L) de la pédale de commande de puissance ou des gaz (T4, 40) en traction et du dispositif de commande de freinage (T8) en poussée est à mailles fines, en ce que les champs (72, 720) de la matrice (71, 710) du champ caractéristique de cotation sont évalués par des cotes, en ce que les zones (61) du champ caractéristique du moteur (T6) qui présentent la même consommation spécifique (be) reçoivent des cotes égales dans les champs (72, 720) du champ caractéristique de cotation (70, 700) qui recouvrent cette zone, et en ce que l'appareil électronique de commande (T2) contient en outre une courbe caractéristique (K1) à l'aide de laquelle les vitesses déterminées pour l'ordre de commutation sont décalées en fonction d'une accélération ou décélération.

2. Dispositif selon la revendication 1, **caractérisé** en ce que le champ caractéristique du moteur (T6) est un champ caractéristique de la consommation spécifique (be) en fonction du régime (n) et la puissance (P).

3. Dispositif selon la revendication 1, **caractérisé** en ce que le champ caractéristique de cotation (70, 700) est une grille couvrant tout le champ caractéristique du moteur (fig. 3 et fig. 4), où les champs (72, 720) de la grille sont formés, dans une première direction (ordonnées), par une subdivision, par exemple en 16 champs, de la course maximale de la pédale des gaz ou de commande de puissance (T4, 40) et, dans l'autre direction (abscisses), par une subdivision du domaine utile pratique du régime (n) du moteur correspondant (T5).

4. Dispositif selon la revendication 1, **caractérisé** en ce que le facteur de correction résultant de la valeur de l'accélération ou de la décélération est déterminé au moyen d'une première courbe caractéristique (K1) et est additionné à la cote déterminée pour le point de fonctionnement (B), et en ce qu'un facteur de correction qui est déterminé au moyen d'une seconde courbe caractéristique (K2) conduit à une zone rectifiée pour la consommation spécifique minimale (Bmin K).

5. Dispositif selon la revendication 4, **caractérisé** en ce que le temps de commutaiton pour un changement de vitesses déterminé est pris en compte dans la détermination du changement de vitesses à opérer, en considérant l'accélération ou la décélération.

6. Dispositif selon la revendication 1, **caractérisé** en ce que le point de commutation et la vitesse à enclencher sont déterminés de la manière suivante :

– déterminer le point de fonctionnement (B) dans le champ caractéristique du moteur, le champ caractéristique étant stocké dans la mémoire (25) et le régime du moteur (nM) et la position de la pédale des gaz ou de commande de puissance (T4, 40) étant déterminés à partir de l'état de marche existant;

– déterminer si le point de fonctionnement (B) se trouve dans la zone de consommation minimale (Bmin), à l'aide du champ caractéristique de cotation stocké dans la mémoire (25);

– en cas de concordance, répéter la détermination du point de fonctionnement jusqu'à ce que se présente un écart entre le point de fonctionnement (B) et la zone de consommation spécifique minimale (Bmin);

– prendre en considération l'accélération ou décélaration existante (a) au moyen d'une courbe caractéristique (K1) stockée dans la mémoire, pour déterminer un facteur de correction, et calculer un point de fonctionnement corrigé (BK) donné par B ± K1;

– déterminer une zone corrigée de consommation spécifique minimale (Bmin K) à partir de la zone de consommation spécifique minimale (Bmin) et d'un second facteur de correction donné par une courbe (K2) (Bmin K = Bmin ± K2);

– déterminer si BK se trouve dans Bmin K; si la réponse est "oui", la détermination du point de fonctionnement recommence au début, et si la réponse est "non", la différence de régime résultant de la différence de cote est calculée;

– déterminer le changement de vitesses nécessaire à partir de la vitesse enclenchée en prenant en considération le domaine de régime (n) stocké dans la mémoire (25) pour le changement de vitesses prévu;

– déterminer les écarts par rapport à la zone corrigée de consommation minimale qui serait obtenue après exécution complère du changement de vitesses, en considérant les durées respectives des changements de vitesses et l'accélération existante, les durées des changements de vitesses étant stockées dans la mémoire (25);

– déterminer le changement de vitesses corrigé;

– respecter une durée de blocage si il y a eu une variation de la position (L) de la pédale des gaz ou de commande de puissance depuis le dernier changement de vitesses.

7. Dispositif selon la revendication 1, **caractérisé** en ce que les bases de cotation pour le champ caractéristique de cotation comprennent d'autres grandeurs à part la consommation spécifique (be), telles que par exemple des champs caractéristiques d'émissions ou aussi la combinaison de différents paramètres.

8. Dispositif selon la revendication 7, **caractérisé** en ce que différents champs caractéristiques de cotation (T7, 70, 700) sont stockés dans l'appareil électrique de commande (T2) et sont sélectionnés par commutation active à partir d'une logique prédéterminée ou par commutation extérieure au moyen d'un signal.

9. Dispositif selon la revendication 1, **caractérisé** en ce que des zones sélectionées du champ caractéristique du moteur (T6, 60) sont évitées dans le fonctionnement en pratique, au moyen d'une cotation orientée (1 à 10) dans le champ caractéristique de cotation (7, 70, 700).

10. Dispositif selon la revendication 8, **caractérisé** en ce que, en poussée, les champs caractéristiques de cotation (7, 70, 700) sont établis et sélectionnés en fonction de certains états de fonctionnement - par exemple poussée, poussée avec ralentisseur; poussée avec frein moteur, poussée avec frein à friction; ABS - ou en fonction de combinaisons desdits états, les champs caractéristiques de cotation étant représetés sur la base du régime du moteur (nM) en combinaison avec la puissance de freinage désirée.

11. Dispositif selon la revendication 1, **caractérisé** en ce que les points de commutation et les vitesses à enclencher sont déterminés à l'aide d'une comparaison entre les valeurs prescrites et réelles de l'accélération (courbes K1/1, K2/1).

12. Dispositif selon la revendication 1, **caractérisé** en ce que les points de commutation et les rapports à enclencher sont déterminés en fonction de la variation d'accélération (courbes K1/2, K2/2).

FIG.1

FIG.2

EP 0 393 040 B1

FIG.3

EP 0 393 040 B1

FIG.4

EP 0 393 040 B1

FIG. 5

FIG. 5A

FIG.6